# EUROPEAN PATENT SPECIFICATION

(11) **EP 3 280 109 B1**
(45) Date of publication and mention of the grant of the patent: **09.10.2019**
(21) Application number: 16182358.8
(22) Date of filing: 02.08.2016
(51) Int. Cl.: H04L 29/06, H04L 12/805, H04L 12/801

(54) **APPARATUS, METHOD AND COMPUTER PROGRAM FOR A BASE STATION TRANSCEIVER OF A MOBILE COMMUNICATION SYSTEM**
VORRICHTUNG, VERFAHREN UND COMPUTERPROGRAMM FÜR EINEN BASISSTATIONSSENDER-EMPFÄNGER EINES MOBILKOMMUNIKATIONSSYSTEMS
APPAREIL, PROCÉDÉ ET PROGRAMME INFORMATIQUE POUR UN ÉMETTEUR-RÉCEPTEUR DE STATION DE BASE D'UN SYSTÈME DE COMMUNICATION MOBILE

(43) Date of publication of application: 07.02.2018
(73) Proprietor: Nash Innovations GmbH, 90491 Nürnberg (DE)
(72) Inventor: Keuker, Claus, 82327 Tutzing (DE); Link, Michael, 91077 Neunkirchen am Brand (DE)
(74) Representative: 2SPL Patentanwälte PartG mbB

(56) References cited:
- US-A1- 2005 111 437
- US-A1- 2015 326 487
- ERICSSON: "IP Fragmentation", 3RD GENERATION PARTNERSHIP PROJECT (3GPP); TECHNICAL SPECIFICATION GROUP (TSG) RADIO ACCESS NETWORK (RAN); WORKING GROUP 3 (WG3)#55,, vol. R3-070616, 27 March 2007 (2007-03-27) , pages 1-8, XP003023546,

## Description

### Technical Field

Embodiments relate to an apparatus, a method and a computer program for a base station transceiver of a mobile communication system and more particularly, but not exclusively, to controlling an end-to-end data packet size at a base station transceiver to reduce packet fragmentation and control information overhead.

### Background

Demands for higher data rates for mobile services are steadily increasing. At the same time modern mobile communication systems as 3rd Generation systems (3G) and 4th Generation systems (4G) provide enhanced technologies, which enable higher spectral efficiencies and allow for higher data rates and cell capacities. Users of today's handhelds become more difficult to satisfy. While old feature phones generated only data or voice traffic, current smartphones, tablets, and netbooks run various applications in parallel that can fundamentally differ from each other. Compared to conventional phones, this application mix leads to a number of new characteristics.

In Internet Protocol (IP) based networks, end-to-end (e2e) IP packet size may be determined by the end-hosts. If the size of an IP datagram exceeds the Maximum Transfer Unit (MTU) size of any hop along the route, the IP datagram is fragmented, resulting in unwanted protocol and processing overhead, especially for IP packet reassem bly at the destination host. In order to avoid IP fragmentation, the end-hosts may generate IP packets with the size of the smallest MTU of all hops along the route, so called "Path MTU" (PMTU).

US 2015/326487 aims at reducing packet fragmentation in mobile networks using network initiated UE MTU configuration. The solutions described in D1 allow LTE/SAE non-access stratum entity, e.g. LTE MME, or access stratum eNB to engage in UE signaling using UE/MME bearer establishment messages, or UE/eNB RRC signaling messages. In this rehards, MME/eNB signals link MTU to UE, enabling UE Network layer to perform local IP fragmentation, or to enable higher layer (e.g. TCP) to select message segmentation size MSS.

### Summary

The invention is defined by the subject matter of the independent claims. Advantageous enhancements are subject to the dependent claims.

Some simplifications may be made in the following summary, which is intended to highlight and introduce some aspects of the various exemplary embodiments, but such simplifications are not intended to limit the scope of the invention(s). Detailed descriptions of a preferred exemplary embodiment adequate to allow those of ordinary skill in the art to make and use the inventive concepts will follow in later sections.

Various embodiments provide an apparatus, a method and a computer program for a base station transceiver of a mobile communication system. Embodiments are based on the finding that several mechanisms exist trying to find the PMTU. For example, the IP packet size used by Transmission Control Protocol (TCP) is based on Maximum Segment Size (MSS) negotiation: In the initial SYNchronization (SYN) segments, both end-hosts signal their MSS, calculated as the MTU of the local interface minus TCP/IP header size (e.g. 40 bytes). The smaller of the two values may then be used by both end-hosts.

A basic mechanism may assume that the PMTU is found at one of the end-hosts, and may result in IP fragmentation when a smaller MTU is used by some host in the network. The problem may be circumvented by using MSS clamping for routers at MTU borders, i.e. they may sniff TCP SYN segments and reduce MSS values according to their smaller MTU size. Note that MSS negotiation and MSS clamping may work for TCP based data transfers. Another mechanism that may optionally be used by end-hosts to avoid IP fragmentation in the network is Path MTU Discovery (PMTUD): Initially, a large packet is sent with the "don't fragment" flag set in the IP header. If such a packet arrives at a hop with smaller MTU size, the packet may be discarded and an Internet Control Message Protocol (ICMP) error message including the MTU size of the limiting hop may be sent back to the sender. This may be repeated until the PMTU is found.

On the backhaul link between a Small Cell (a base station transceiver with a small coverage region, e.g. a Long Term Evolution (Home) eNodeB (LTE (H)eNB)) and the Core Network (CN), end-to-end (e2e) IP packets (IP packets exchanged between an application running on the User Equipment (UE) and a peer application, e.g. running on a server in the Internet) are transported via General Packet Radio Service Tunneling Protocol (GPRS, GTP) tunnels. To each e2e IP packet, a GTP/ User Datagram Protocol (UDP)/IP header is added, plus additional IP Security (IPsec)/IP headers in case IPsec is used to secure the backhaul link. If the size of the resulting backhaul IP packet exceeds the Maximum Transfer Unit (MTU) of the backhaul link, the backhaul IP packet is fragmented, in the IPsec case possibly both the inner and the outer IP packet. As a result, the eNB may have to process three backhaul IP packets for each e2e IP packet. While this may be supported by the eNB in principle, it has a performance impact and may be avoided as far as possible in embodiments.

Note that e2e PMTUD might not work in this scenario, because the e2e IP packets are not fragmented outside of the GTP tunnel. Also note that the problem might get worse when the backhaul is provided by a mobile link (Vehicular Small Cell scenario). To avoid IP fragmentation on the "real" backhaul of the mobile backhaul, the e2e MTU size may be reduced even further. There are proposals, e.g. by the 3^{rd} Generation Partnership Project (3GPP), to limit e2e MTU size by means of None Access Stratum (NAS) signaling (MTU size in Protocol Configuration Options (PCO), see Technical Specification (TS) 24.008). This may require knowledge of all overhead headers in advance and might not adapt to different eNB configurations.

Embodiments are therefore based on the finding that at a base station transceiver data packets can be analyzed and a data packet size can be determined that avoids data packet fragmentation. This is possible because at a base station transceiver packet inspection is possible. Although a base station transceiver, e.g. an eNB, might not act as an IP router for the e2e IP packets, it still has access to the e2e IP packets, for example, on an internal interface between a Packet Data Convergence Protocol (PDCP) and GTP protocol entities. Moreover, a base station transceiver may be aware of the MTU size of the backhaul link, for example, of the GTP/UDP/IP/IPsec/IP header overhead added by the GTP tunnel. It is a finding of embodiments that a base station transceiver may calculate the maximum allowed e2e MTU size avoiding IP fragmentation on the backhaul link.

At least some embodiments may enable e2e packet inspection at the base station transceiver, e.g. an eNB inspects the e2e IP packets and processes them both in terms of PMTUD and MSS Clamping. With respect to PMTUD, e2e IP packets with "don't fragment" flag set and a size exceeding a calculated/determined allowed e2e MTU size may be discarded, and the appropriate ICMP error message may be sent back to the sender. With respect to MSS Clamping, in e2e IP packets containing TCP SYN segments the MSS value may be modified according to a calculated/determined allowed e2e MTU size.

Embodiments provide an apparatus for a base station transceiver of a mobile communication system. The apparatus comprises a first interface configured to wirelessly communicate with one or more mobile transceivers, and a second interface configured to communicate with a backhaul component of the mobile communication system. The apparatus further comprises a control module, which is configured to control the first and second interfaces. The control module is further configured to analyze one or more data packets communicated between the one or more mobile transceivers and the backhaul component via the base station transceiver. The control module is further configured to determine a data packet size for the data packets that avoids data packet fragmentation of data packets, which are communicated using the second interface. The control module is further configured to modify at least one data packet for the communication between the one or more mobile transceivers and the backhaul component based on the data packet size. Embodiments may avoid data fragmentation at a base station transceiver.

In a further embodiment the control module is configured to determine a protocol header size used for the data packet and to base the determination of the data packet size on the protocol header size. Embodiments may take protocol header sizes into account. For example, the data packet fragmentation may correspond to Internet Protocol, IP, packet fragmentation. Embodiments may avoid IP data packet fragmentation.

In some embodiments the control module may be configured to carry out packet inspection on the one or more data packets, embodiments may hence allow avoidance of packet fragmentation at an intermediate node (base station transceiver) or at a node not being an end node. The control module may be configured to effect avoidance of data packet fragmentation of data packets, which are received from the backhaul component. Embodiments may avoid data packet fragmentation in the downlink. In some embodiments the control module may be configured to effect avoidance of data packet fragmentation of data packets, which are transmitted to the backhaul component. Embodiments may avoid data packet fragmentation in the uplink, the downlink, or both, respectively.

The control module may be configured to determine the protocol header size based on one or more elements of the group of General Packet Radio Service Tunneling Protocol, GPRS, GTP, User Datagram Protocol, UDP, IP, IP Security, IPsec, and a protocol of the Transmission Control Protocol/IP protocol family, TCP/IP. Embodiments may avoid data packet fragmentation for multiple protocol headers. The control module may be configured to determine whether a flag is set in a data packet. The flag may indicate that the data packet should not be fragmented. The control module may be configured to, in case the data packet exceeds the data packet size and the flag is set, reply to a sender of the data packet with an error message. Embodiments may make use of other protocol mechanisms by modifying data packets in transit, accordingly. For example, the error message may be an Internet Control Message Protocol, ICMP, message.

In further embodiments the control module may be configured to determine whether a data packet is a TCP Synchronization, TCP SYN, segment. The control module may be configured to, in case the data packet is a TCP SYN segment, change a Maximum Segment Size, MSS, in the TCP SYN segment to the data packet size reduced by a TCP/IP header size. Embodiments may affect end TCP/IP nodes to adapt a TCP/IP packet size configuration to a data packet size that avoids fragmentation. The control module may be configured to analyze the one or more data packets between a Packet Data Convergence Protocol, PDCP, and a GTP User Plane, GTP-U. Embodiments may be adapted to the mobile communication system.

The control module may be configured to determine the data packet size as an end-to-end Maximum Transfer Unit, MTU, size of a local network interface. The control module may be configured to determine the data packet size based on a configuration of a backhaul link of the base station transceiver. Hence, the data packet size may be adapted to a protocol stack of the mobile communication system and the e2e protocols. The control module may be configured to determine the data packet size based on a Path MTU Discovery, PMTUD, on a link to the backhaul component. The control module may be configured to determine the data packet size based on an MTU size signaled by an external entity. For example, the control module may be configured to determine the data packet size based on Non Access Stratum, NAS, signaling. Embodiments may hence take into account data size information from other entities, e.g. outside the Radio Access Network (RAN). For example, the control module may be configured to determine the data packet size based on a backhaul MTU size and a local protocol overhead size. The protocol overhead may comprise GTP/UDP/IP and optional IPsec/IP header sizes.

Embodiments also provide a method for a base station transceiver of a mobile communication system. The method comprises wirelessly communicating with one or more mobile transceivers. The method further comprises communicating with a backhaul component of the mobile communication system. The method further comprises analyzing one or more data packets communicated between the one or more mobile transceivers and the backhaul component via the base station transceiver. The method further comprises determining a data packet size for the data packets that avoids data packet fragmentation of data packets, which are communicated with the backhaul component. The method further comprises modifying at least one data packet for the communication between the one or more mobile transceivers and the backhaul component based on the data packet size.

Embodiments further provide a computer program having a program code for performing one or more of the above described methods, when the computer program is executed on a computer, processor, or programmable hardware. A further embodiment is a computer readable storage medium storing instructions which, when executed by a computer, processor, or programmable hardware, cause the computer to implement one of the methods described herein.

### Brief description of the figures

Some other features or aspects will be described using the following non-limiting embodiments of apparatuses and/or methods and/or computer programs and/or computer program products by way of example only, and with reference to the accompanying figures, in which
Fig. 1 illustrates a block diagram of an embodiment of an apparatus for a base station transceiver;
Fig. 2 shows a protocol stack in an embodiment;
Fig. 3 shows an IPsec Tunnel Mode in an embodiment; and
Fig. 4 shows a block diagram of a flow chart of an embodiment of a method for a base station transceiver.

### Description of Embodiments

Various example embodiments will now be described more fully with reference to the accompanying drawings in which some example embodiments are illustrated. In the figures, the thicknesses of lines, layers and/or regions may be exaggerated for clarity.

Accordingly, while example embodiments are capable of various modifications and alternative forms, embodiments thereof are shown by way of example in the figures and will herein be described in detail. It should be understood, however, that there is no intent to limit example embodiments to the particular forms disclosed, but on the contrary, example embodiments are to cover all modifications and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising", "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which example embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

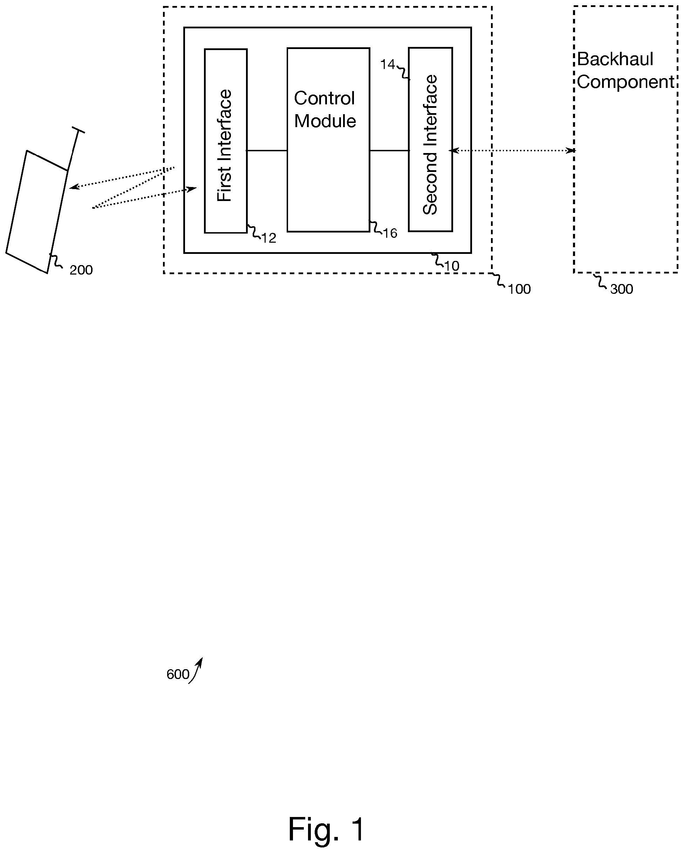

Fig. 1 illustrates a block diagram of an embodiment of an apparatus 10 for a base station transceiver 100. Embodiments also provide a base station transceiver 100 comprising the apparatus 10. The apparatus 10 is configured for a base station transceiver 100 of a mobile communication system 600. In embodiments the mobile communication system 600 may, for example, correspond to one of the mobile communication systems standardized by the 3^{rd} Generation Partnership Project (3GPP), e.g. Global System for Mobile Communications (GSM), Enhanced Data rates for GSM Evolution (EDGE), GSM EDGE Radio Access Network (GERAN), High Speed Packet Access (HSPA), Universal Terrestrial Radio Access Network (UTRAN) or Evolved UTRAN (E-UTRAN), Long Term Evolution (LTE) or LTE-Advanced (LTE-A), or mobile communication systems with different standards, e.g. Worldwide Interoperability for Microwave Access (WIMAX) IEEE 802.16 or Wireless Local Area Network (WLAN) IEEE 802.11, generally any system based on Time Division Multiple Access (TDMA), Frequency Division Multiple Access (FDMA), Orthogonal Frequency Division Multiple Access (OFDMA), Code Division Multiple Access (CDMA), etc. In the following the terms mobile communication system and mobile communication network are used synonymously.

The mobile communication system 600 may comprise a plurality of transmission points or base station transceivers 100 configured to communicate radio signals with a mobile transceiver 200. In embodiments, the mobile communication system 600 may comprise mobile transceivers 200, relay station transceivers and/or base station transceivers 100. The relay station transceivers and base station transceivers 100 can be composed of one or more central units and one or more remote units.

A mobile transceiver 200 may correspond to a smartphone, a cell phone, User Equipment (UE), a laptop, a notebook, a personal computer, a Personal Digital Assistant (PDA), a Universal Serial Bus (USB) -stick, a tablet computer, a car, etc. A mobile transceiver 200 or terminal may also be referred to as UE or user in line with the 3GPP terminology. A base station transceiver 100 can be located in the fixed or stationary part of the network or system. A base station transceiver 100 may correspond to a remote radio head, a transmission point, an access point, a macro cell, a small cell, a micro cell, a pico cell, a femto cell, a metro cell etc. The term small cell may refer to any cell smaller than a macro cell, i.e. a micro cell, a pico cell, a femto cell, or a metro cell. Moreover, a femto cell is considered smaller than a pico cell, which is considered smaller than a micro cell. A base station transceiver 100 can be a wireless interface of a wired network, which enables transmission and reception of radio signals to a UE, mobile transceiver or relay transceiver. Such a radio signal may comply with radio signals as, for example, standardized by 3GPP or, generally, in line with one or more of the above listed systems. Thus, a base station transceiver 100 may correspond to a NodeB with a Radio Network Controller (RNC), an eNodeB, a BTS with a Base Station Controller (BSC), an access point, any entity of a mobile communication system 600 at which e2e IP packets could be inspected, etc. A relay station transceiver may correspond to an intermediate network node in the communication path between a base station transceiver 100 and a mobile station transceiver 200. A relay station transceiver may forward a signal received from a mobile transceiver 200 to a base station transceiver 100, signals received from the base station transceiver 100 to the mobile station transceiver 200, respectively.

The mobile communication system 600 may be cellular. The term cell refers to a coverage area of radio services provided by a transmission point, a remote unit, a remote head, a remote radio head, a base station transceiver, relay transceiver or a NodeB, an eNodeB, respectively. The terms cell and base station transceiver may be used synonymously. In some embodiments a cell may correspond to a sector. For example, sectors can be achieved using sector antennas, which provide a characteristic for covering an angular section around a base station transceiver or remote unit. In some embodiments, a base station transceiver or remote unit may, for example, operate three or six cells covering sectors of 120° (in case of three cells), 60° (in case of six cells) respectively. Likewise a relay transceiver may establish one or more cells in its coverage area. A mobile transceiver can be registered or associated with at least one cell, i.e. it can be associated to a cell such that data can be exchanged between the network and the mobile in the coverage area of the associated cell using a dedicated channel, link or connection. A mobile transceiver may hence register or be associated with a relay station or base station transceiver directly or indirectly, where an indirect registration or association may be through one or more relay transceivers.

Coming back to the embodiment depicted in Fig. 1, the apparatus 10 comprises a first interface 12, which configured to wirelessly communicate with one or more mobile transceivers 200. The apparatus 10 further comprises a second interface 14 configured to communicate with a backhaul component 300 of the mobile communication system 600.

In embodiments the interfaces 12, 14 may correspond to any interface adapted to or configured for the respective communication or access technology, which may be wireless or wire line communication. An interface 12, 14 may use a certain access technology, protocol, medium, etc. to establish a connection between a base station transceiver apparatus 10 and the one or more mobile transceivers 200 or the backhaul component 300. As an example, in an embodiment the interfaces 12, 14 may correspond to an Internet Protocol (IP) or a mobile communication standard based communication interface, e.g. a Registered Jack 45 (RJ 45) based connection to exchange information in terms of binary data packets. In embodiments, any other interface is conceivable to establish a connection or communication link between the apparatus and any other entity, be it based on analog or digital communication.

The apparatus 10 further comprises a control module 16, which is configured to control the first and second interfaces 12, 14. The control module 16 may correspond to one or more control units, one or more control devices, or any means for controlling. In some embodiments the control module 16 may be implemented in software, which is executable on accordingly adapted hardware, such as a processor, a Digital Signal Processor (DSP), a multipurpose processor, or the like.

The control module 16 is further configured to analyze one or more data packets communicated between the one or more mobile transceivers 200 and the backhaul component 300 via the base station transceiver 100. The control module 16 is further configured to determine a data packet size for the data packets that avoids data packet fragmentation of data packets, which are communicated using the second interface 14. The control module 16 is further configured to modify at least one data packet for the communication between the one or more mobile transceivers 200 and the backhaul component 300 based on the data packet size. Embodiments avoid fragmentation on the backhaul interface. The effect may be bidirectional, i.e. fragmentation and reassembly may be avoided for both communication directions, at the apparatus and the backhaul component, respectively. The control module 16 may be configured to effect avoidance of data packet fragmentation of data packets, which are received from the backhaul component 300, and/or the control module 16 may be configured to effect avoidance of data packet fragmentation of data packets, which are transmitted to the backhaul component 300.

As will be detailed subsequently, the control module 16 may modify or adjust a data packet, for example in terms of certain control or header information. The content of one or more packets may be modified in a way triggering the end-hosts to send follow-up packets with the right size, the determined data packet size, respectively. The content of the data packet is to be understood as header and payload.

In another embodiment the control module 16 is configured to determine a protocol header size used for the data packet and to base the determination of the data packet size on the protocol header size. The header size depends on the protocol stack or suite used in a respective communication scenario. For example, the data packet fragmentation corresponds to Internet Protocol, IP, packet fragmentation.

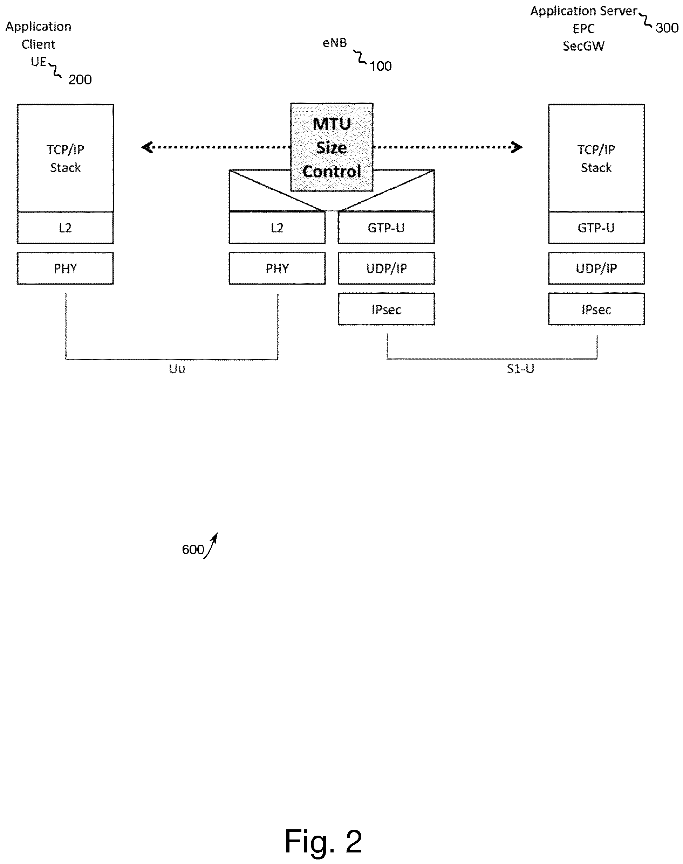

Fig. 2 shows a user plane protocol stack in an embodiment of an LTE network 600. Fig 2 illustrates a mobile transceiver or UE 200 on the left, a base station transceiver or eNB 100 comprising the above apparatus 10 in the center, and an entity 300, summarizing one or more backhaul components 300, examples are a Secure GateWay (secGW) of an Evolved Packet Core (EPC) as gateway (e.g. Serving GateWay (SGW)), a Packet Data Network (PDN)-Gateway (P-GW), an application server, the internet or any backhaul component 300. In Fig. 2 the backhaul entities 300 are depicted as a single entity with a single protocol stack. In an implementation the backhaul entities 300 for the relevant protocols may correspond to multiple components or elements. For example, IPsec may terminate in a Security GW, GTP/UDP/IP may terminate in a S-GW in the EPC, TCP/IP may terminate in an application server, etc. For sake of simplification the different network elements are not displayed in Fig. 2 in a distributed manner, as full representation with their complete protocol stacks would jeopardize overview and introduce many further protocols, which might not be relevant for embodiments.

At the mobile transceiver 200 there is the layer 3 TCP/IP protocol stack. TCP/IP is to be understood as any protocol of the TCP/IP protocol family, e.g. mainly protocols above layer 3. Examples of the TCP/IP protocol family are Transmission Control Protocol (TCP), User Datagram Protocol (UDP), Stream Control Transmission Protocol (SCTP), Transport Layer Security (TLS), Secure Socket Layer (SSL), Datagram Transport Layer Security (DTLS), Internet Protocol (IP), Internet Protocol Security (IPsec), Internet Control Message Protocol (ICMP), etc.

In Fig. 2 on the UE 200 side, underneath the TCP/IP stack there are layer 2 protocols of the mobile communication system, for example, Packet Data Convergence Protocol (PDCP), Radio Link Control (RLC), Medium Access Control (MAC). The PHYsical layer (PHY) then adapts the signals to the Uu air interface. At the base station transceiver 100 the PHY and Layer 2 (L2) protocols are accordingly decoded. The data packets are then forwarded via GTP-U, UDP/IP and IPsec via the S1-U interface to the backhaul component 300 (e.g. SecGW or application server), where the TCP/IP stack is terminated in this embodiment. As indicated in Fig. 2 the apparatus 10 at the base station transceiver 100 may carry out MTU size control.

The control module 16 of the apparatus 10 at the base station transceiver 100 is configured to carry out packet inspection on the one or more data packets. In the embodiment depicted in Fig. 2 the control module 16 is configured to determine the protocol header size based on one or more elements of the group of General Packet Radio Service Tunneling Protocol, GPRS, GTP, User Datagram Protocol, UDP, IP, IP Security, IPsec, and a protocol of the Transmission Control Protocol/IP protocol family, TCP/IP. In this embodiment the eNB 200 retrieves its backhaul MTU size. Depending on the backhaul configuration, the following options may be considered:
- Fixed MTU size of the local interface used for the backhaul link.
- PMTU of the link to the SGW, determined by means of PMTUD.
- In case of a mobile backhaul: MTU signaled by the Network Access Device (NAD), e.g. as signaled by the mobile backhaul provider via NAS signaling.

The eNB 200 calculates the corresponding e2e MTU size = backhaul MTU size - protocol overhead size, where the protocol overhead includes GTP/UDP/IP and optional IPsec/IP header sizes. Some security margin may be included. Note that the e2e MTU cannot be directly signaled to the UE by the eNB in this scenario. Instead, the e2e MTU size may be used as follows. The control module 16 is configured to analyze the one or more data packets between PDCP and GTP-U. This is also illustrated by Fig. 2. PDCP (contained in L2) delivers e2e IP packets to some entity, e.g. a forwarding entity implemented in the control module 16 or another component, which forwards these packets into GTP-U. At the apparatus 10 at this layer the e2e IP packets are visible and modifiable. In Fig. 2 the dotted arrows indicate that the control module 16 modifies e2e TCP/IP packets, triggering the end-hosts to send follow-up packets with the right size. Note that in this context "TCP/IP" means "any protocol of the TCP/IP protocol family", not just TCP or IP.

Regarding PMTUD, in this embodiment, whenever an e2e IP packet arrives at the eNB 100 from the UE 200 (i.e. PDCP SDU received via LTE Uu interface) with the following properties:
- IP packet size exceeds e2e MTU size, and
- "Don't fragment" flag is set in the IP header,
the IP packet is discarded and an ICMP message "Destination Unreachable - Fragmentation Needed - MTU of next hop = e2e MTU size" is created and sent back to the UE. In this embodiment, the control module 16 of the base station transceiver apparatus 10 is configured to determine whether a flag is set ("Don't fragment") in a data packet (e.g. in the IP header). The flag indicates that the data packet should not be fragmented. The control module 16 is configured to - in case the data packet exceeds the data packet size and the flag is set - reply to a sender of the data packet with an error message. The error message is an ICMP message.

Similarly, whenever an e2e IP packet arrives at the eNB 200 from a peer host (i.e. e2e IP packet received via GTP-U) with the following properties:
- IP packet size exceeds e2e MTU size, and
- "Don't fragment" flag is set in the IP header,
the IP packet shall be discarded, and an ICMP message "Destination Unreachable - Fragmentation Needed - MTU of next hop = e2e MTU size" is created and sent back to the peer IP address. With this approach, the eNB 200 supports PMTUD in both directions, avoiding IP fragmentation on the backhaul link for any e2e application using PMTUD. Note that the eNB 100 may still support IP fragmentation on the backhaul for applications not using e2e PMTUD.

With respect to MSS clamping, in an embodiment, the eNB 100 supports MSS clamping as follows. The eNB 100 inspects the e2e IP packets in order to find TCP SYN segments. In these segments, the MSS shall be limited to e2e MTU size - Header size (40 bytes). Note that a modification of the TCP header may require re-calculating the TCP checksum. The control module 16 is configured to determine whether a data packet is a TCP SYN segment and the control module 16 is configured to - in case the data packet is a TCP SYN segment - change the MSS in the TCP SYN segment to the data packet size reduced by a TCP/IP header size. E.g. MSS = MTU-40 bytes, where 40 bytes is a basic size of TCP/IP header w/o options. I.e. MSS = data packet size -40 bytes.

The control module 16 is configured to determine the data packet size as an end-to-end MTU size of a local network interface. The control module 16 is configured to determine the data packet size based on a configuration of a backhaul link of the base station transceiver 100.

The control module 16 is configured to determine the data packet size based on the PMTUD on a link to the backhaul component 300 and/or the control module 16 is configured to determine the data packet size based on an MTU size signaled by an external entity, e.g. a Network Access Device (NAD), such as a modem, an access router, etc.

In another embodiment the control module 16 may be configured to determine the data packet size based on Non Access Stratum, NAS, signaling. The control module 16 may be configured to determine the data packet size based on a backhaul MTU size and a local protocol overhead size. The protocol overhead may comprise GTP/UDP/IP and optional IPsec/IP header sizes.

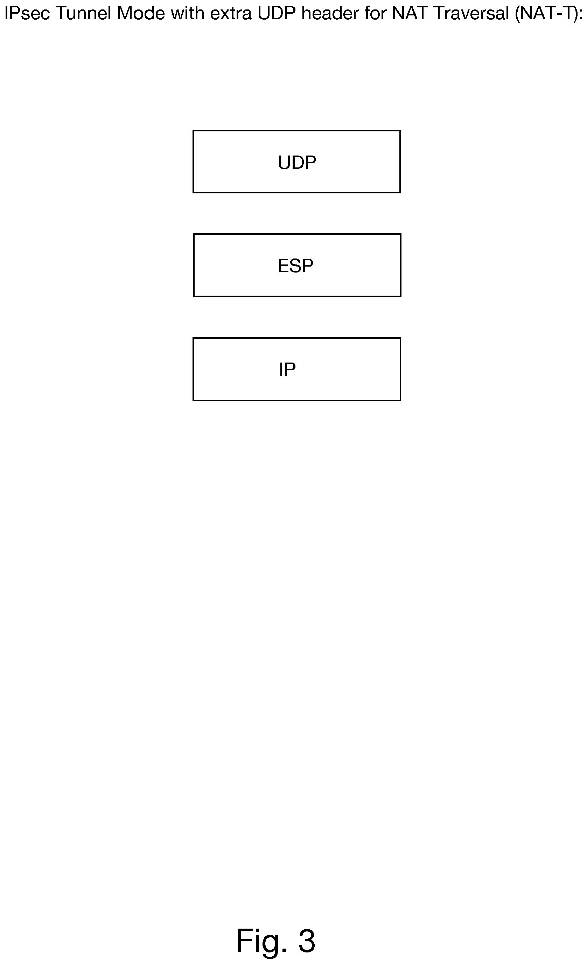

Fig. 3 shows an IPsec Tunnel Mode in an embodiment. The protocol stack comprises UDP, Encapsulating Security Payload (ESP), and IP. The IPsec tunnel Mode comprises an extra UDP header for NAT Traversal (NAT-T). Such extra or additional header may as well be taken into account by the control module 16 in further embodiments.

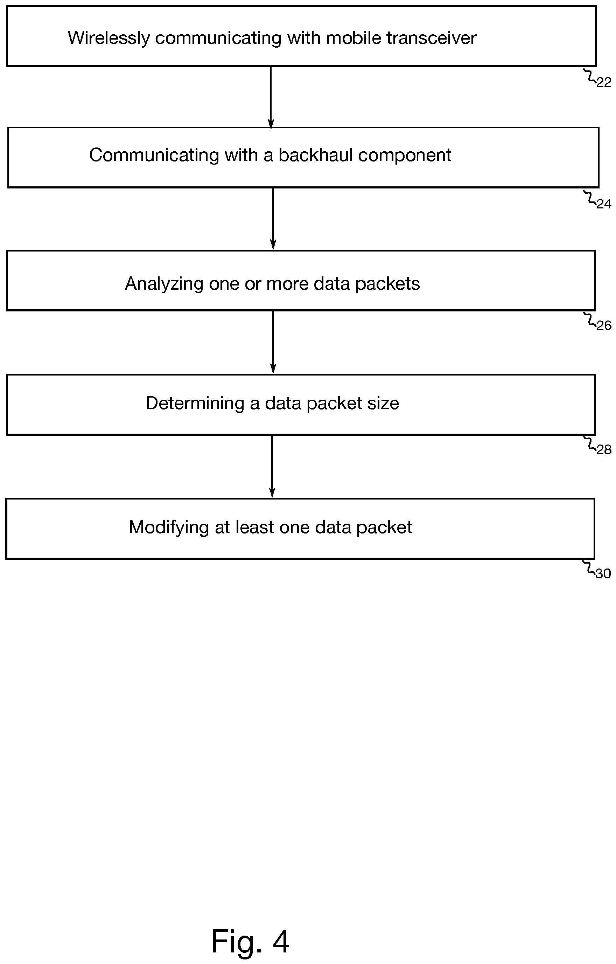

Fig. 4 shows a block diagram of a flow chart of an embodiment of a method for a base station transceiver 100 of a mobile communication system 600. The method comprises wirelessly communicating 22 with one or more mobile transceivers 200, and communicating 24 with a backhaul component 300 of the mobile communication system 600. The method further comprises analyzing 36 one or more data packets communicated between the one or more mobile transceivers 200 and the backhaul component 300 via the base station transceiver 100. The method further comprises determining 28 a data packet size for the data packets that avoids data packet fragmentation of data packets, which are communicated with the backhaul component 300. The method further comprises modifying at least one data packet for the communication between the one or more mobile transceivers 200 and the backhaul component 300 based on the data packet size.

A further embodiment is a computer readable storage medium storing instructions which, when executed by a computer, cause the computer to implement one of the methods described herein. Other embodiments are a computer program or a computer program product having a program code for performing anyone of the above described methods, when the computer program or computer program product is executed on a processor, computer, or programmable hardware.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as magnetic disks and magnetic tapes, hard drives, or optically readable digital data storage media. The embodiments are also intended to cover computers programmed to perform said steps of methods described herein or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for transceiving", "means for transmitting", "means for receiving", "means for controlling", etc., may be provided through the use of dedicated hardware, such as "a transceiver", "a transmitter", "a receiver", "a controller", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/or custom, may also be included. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

It is further to be noted that methods disclosed in the specification or in the claims may be implemented by a device having means for performing each of the respective steps of these methods.

## Claims

1. An apparatus (10) for a base station transceiver (100) of a mobile communication system (600), the apparatus (10) comprising
a first interface (12) configured to wirelessly communicate with one or more mobile transceivers (200);
a second interface (14) configured to communicate with a backhaul component (300) of the mobile communication system (600); and
a control module (16) configured to:
control the first and second interfaces (12; 14),
analyze one or more data packets communicated between the one or more mobile transceivers (200) and the backhaul component (300) via the base station transceiver (100),
determine a data packet size which would avoid fragmentation at the base station transceiver of packets if said packets were communicated using the second interface (14), based on the analysis of said one or more data packets, and
modify at least one further data packet communicated between the one or more mobile transceivers (200) and the backhaul component (300) based on the determined data packet size,
wherein the content of said at least one further packet is modified in a way triggering the one or more mobile transceivers (200) or the backhaul component (300) to send follow-up packets with the determined data packet size,
wherein the follow-up data packets are communicated between the one or more mobile transceivers (200) and the backhaul component (300) via the control module (16).

2. The apparatus (10) of claim 1, wherein the control module (16) is configured to determine a protocol header size used for the data packet and to base the determination of the data packet size on the protocol header size, and/or wherein the data packet fragmentation corresponds to Internet Protocol, IP, packet fragmentation.

3. The apparatus (10) of one of the claims 1 or 2, wherein the control module (16) is configured to carry out packet inspection on the one or more data packets, and/or wherein the control module (16) is configured to effect avoidance of data packet fragmentation of data packets, which are received from the backhaul component (300), and/or wherein the control module (16) is configured to effect avoidance of data packet fragmentation of data packets, which are transmitted to the backhaul component (300).

4. The apparatus (10) of one of the claims 2 or 3, wherein the control module (16) is configured to determine the protocol header size based on one or more elements of the group of General Packet Radio Service Tunneling Protocol, GPRS, GTP, User Datagram Protocol, UDP, IP, IP Security, IPsec, and a protocol of the Transmission Control Protocol/IP protocol family, TCP/IP.

5. The apparatus (10) of one of the claims 2 to 4, wherein the control module (16) is configured to determine whether a flag is set in a data packet, the flag indicating that the data packet should not be fragmented, and wherein the control module (16) is configured to, in case the data packet exceeds the data packet size and the flag is set, reply to a sender of the data packet with an error message.

6. The apparatus (10) of claim 5, wherein the error message is an Internet Control Message Protocol, ICMP, message.

7. The apparatus (10) of one of the preceding claims, wherein the control module (16) is configured to determine, as part of the analyzing and modifying, whether a data packet is a TCP Synchronization, TCP SYN, segment and wherein the control module (16) is configured to, in case the data packet is a TCP SYN segment, change a Maximum Segment Size, MSS, in the TCP SYN segment to the data packet size reduced by a TCP/IP header size.

8. The apparatus (10) of one of the preceding claims, wherein the control module (16) is configured to analyze, as part of the analyzing and modifying, the one or more data packets between a Packet Data Convergence Protocol, PDCP, and a GTP User Plane, GTP-U.

9. The apparatus (10) of one of the preceding claims, wherein the control module (16) is configured to determine the data packet size as an end-to-end Maximum Transfer Unit, MTU, size of a local network interface, and/or wherein the control module (16) is configured to determine the data packet size based on a configuration of a backhaul link of the base station transceiver (100).

10. The apparatus (10) of one of the preceding claims, wherein the control module (16) is configured to determine the data packet size based on a Path MTU Discovery, PMTUD, on a link to the backhaul component (300) and/or wherein the control module (16) is configured to determine the data packet size based on an MTU size signaled by an external entity.

11. The apparatus (10) of one of the preceding claims, wherein the control module (16) is configured to determine the data packet size based on Non Access Stratum, NAS, signaling.

12. The apparatus (10) of one of the preceding claims, wherein the control module (16) is configured to determine the data packet size based on a backhaul MTU size and a local protocol overhead size.

13. The apparatus (10) of claim 12, wherein the protocol overhead comprises GTP/UDP/IP and optional IPsec/IP header sizes.

14. A method for a base station transceiver (100) of a mobile communication system (600), the method comprising
wirelessly communicating (22) with one or more mobile transceivers (200); communicating (24) with a backhaul component (300) of the mobile communication system (600);
analyzing (26) one or more data packets communicated between the one or more mobile transceivers (200) and the backhaul component (300) via the base station transceiver (100);
determining (28) a data packet size which would avoid fragmentation at the base station transceiver of packets if said packets were communicated with the backhaul component (300), based on the analyzing of said one or more data packets; and
modifying (30) at least one further data packet communicated between the one or more mobile transceivers (200) and the backhaul component (300) based on the determined data packet,
wherein the content of said at least one further packet is modified in a way triggering the one or more mobile transceivers (200) or the backhaul component (300) to send follow-up packets with the determined data packet size,
wherein the follow-up data packets are communicated between the one or more mobile transceivers (200) and the backhaul component (300) via the base station transceiver.

15. A computer program having a program code for performing the method of claim 14, when the computer program is executed on a computer, a processor, or a programmable hardware component.

## Patentansprüche

1. Eine Vorrichtung (10) für einen Basisstations-Sendeempfänger (100) eines Mobilkommunikationssystems (600), die Vorrichtung (10) umfassend
eine erste Schnittstelle (12), die ausgebildet ist zum drahtlosen Kommunizieren mit einem oder mehreren mobilen Sendeempfängern (200);
eine zweite Schnittstelle (14), die ausgebildet ist zum Kommunizieren mit einer Backhaul-Komponente (300) des Mobilkommunikationssystems (600); und
ein Steuerungsmodul (16), das ausgebildet ist zum:
Steuern der ersten und zweiten Schnittstelle (12; 14),
Analysieren von einem oder mehreren Datenpaketen, die zwischen dem einem oder den mehreren mobilen Sendeempfängern (200) und der Backhaul-Komponente (300) über den Basisstations-Sendeempfänger (100) kommuniziert werden,
Bestimmen einer Datenpaketgröße, die an dem Basisstations-Sendeempfänger eine Fragmentierung von Paketen vermeiden würde, wenn die Pakete unter Verwendung der zweiten Schnittstelle (14) kommuniziert werden würden, basierend auf der Analyse von dem einen oder den mehreren Datenpaketen, und
Modifizieren von zumindest einem weiteren Datenpaket, das zwischen dem einen oder den mehreren mobilen Sendeempfängern (200) und der Backhaul-Komponente (300) basierend auf der bestimmten Datenpaketgröße kommuniziert wird,
wobei der Inhalt des zumindest einen weiteren Pakets auf eine Art modifiziert wird, dass der eine oder die mehreren mobilen Sendeempfänger (200) oder die Backhaul-Komponente (300) veranlasst werden, Nachfolgepakete mit der bestimmten Datenpaketgröße zu senden,
wobei die Nachfolgedatenpakete zwischen dem einen oder den mehreren mobilen Sendeempfängern (200) und der Backhaul-Komponente (300) über das Steuerungsmodul (16) kommuniziert werden.

2. Die Vorrichtung (10) gemäß Anspruch 1, wobei das Steuerungsmodul (16) ausgebildet ist zum Bestimmen einer Protokollkopf-Größe, die für das Datenpaket verwendet wird, und zum Basieren der Bestimmung der Datenpaketgröße auf der Protokollkopf-Größe, und/oder wobei die Datenpaketfragmentierung einer Internetprotokoll-, IP-, Paketfragmentierung entspricht.

3. Die Vorrichtung (10) gemäß einem der Ansprüche 1 oder 2, wobei das Steuerungsmodul (16) ausgebildet ist zum Durchführen einer Paketüberprüfung auf dem einem oder den mehreren Datenpaketen, und/oder wobei das Steuerungsmodul (16) ausgebildet ist zum Bewirken der Vermeidung einer Datenpaketfragmentierung von Datenpaketen, die von der Backhaul-Komponente (300) empfangen werden, und/oder wobei das Steuerungsmodul (16) ausgebildet ist zum Bewirken der Vermeidung einer Datenpaketfragmentierung von Datenpaketen, die an die Backhaul-Komponente (300) gesendet werden.

4. Die Vorrichtung (10) gemäß einem der Ansprüche 2 oder 3, wobei das Steuerungsmodul (16) ausgebildet ist zum Bestimmen der Protokollkopf-Größe basierend auf einem oder mehreren Elementen der Gruppe von General Packet Radio Service Tunneling-Protokoll, GPRS, GTP, User Datagram Protocol, UDP, IP, IP Security, IPsec und ein Protokoll der Transmission Control Protocol/IP Protocol-Familie, TCP/IP.

5. Die Vorrichtung (10) gemäß einem der Ansprüche 2 bis 4, wobei das Steuerungsmodul (16) ausgebildet ist zum Bestimmen ob ein Flag in einem Datenpaket gesetzt ist, wobei der Flag anzeigt, dass das Datenpaket nicht fragmentiert sein sollte, und wobei das Steuerungsmodul (16) ausgebildet ist zum, falls das Datenpaket die Datenpaketgröße überschreitet und der Flag gesetzt ist, Antworten an einen Sender des Datenpakets mit einer Fehlermeldung.

6. Die Vorrichtung (10) gemäß Anspruch 5, wobei die Fehlermeldung eine Internet Control Message Protocol-, ICMP-, Meldung ist.

7. Die Vorrichtung (10) gemäß einem der vorangehenden Ansprüche, wobei das Steuerungsmodul (16) ausgebildet ist zum Bestimmen, als Teil des Analysierens und Modifizierens, ob ein Datenpaket ein TCP Synchronisation-, TCP SYN-, Segment ist und wobei das Steuerungsmodul (16) ausgebildet ist zum, falls das Datenpaket ein TCP SYN-Segment ist, Ändern einer Maximum Segment Size, MSS, in dem TCP SYN-Segment zu der Datenpaketgröße, die um eine TCP/IP-Kopf-Größe reduziert ist.

8. Die Vorrichtung (10) gemäß einem der vorangehenden Ansprüche, wobei das Steuerungsmodul (16) ausgebildet ist zum Analysieren, als Teil des Analysierens und Modifizierens, des einen oder der mehreren Datenpakete zwischen einem Packet Data Convergence Protocol, PDCP, und einer GTP User Plane, GTP-U.

9. Die Vorrichtung (10) gemäß einem der vorangehenden Ansprüche, wobei das Steuerungsmodul (16) ausgebildet ist zum Bestimmen der Datenpaketgröße als eine Ende-zu-Ende-Maximum Transfer Unit, -MTU-, Größe einer Lokales-Netzwerk-Schnittstelle, und/oder wobei das Steuerungsmodul (16) ausgebildet ist zum Bestimmen der Datenpaketgröße basierend auf einer Konfiguration einer Backhaul-Verbindung des Basisstations-Sendeempfängers (100).

10. Die Vorrichtung (10) gemäß einem der vorangehenden Ansprüche, wobei das Steuerungsmodul (16) ausgebildet ist zum Bestimmen der Datenpaketgröße basierend auf einer Path MTU Discovery, PMTUD, auf einer Verbindung zu der Backhaul-Komponente (300) und/oder wobei das Steuerungsmodul (16) ausgebildet ist zum Bestimmen der Datenpaketgröße basierend auf einer durch eine externe Entität signalisierten MTU-Größe.

11. Die Vorrichtung (10) gemäß einem der vorangehenden Ansprüche, wobei das Steuerungsmodul (16) ausgebildet ist zum Bestimmen der Datenpaketgröße basierend auf einer Non Access Stratum-, NAS-, Signalisierung.

12. Die Vorrichtung (10) gemäß einem der vorangehenden Ansprüche, wobei das Steuerungsmodul (16) ausgebildet ist zum Bestimmen der Datenpaketgröße basierend auf einer Backhaul-MTU-Größe und einer lokalen Protokoll-Overhead-Größe.

13. Die Vorrichtung (10) gemäß Anspruch 12, wobei das Protokoll-Overhead GTP/UDP/IP- und optionale IPsec/IP-Kopf-Größen umfasst.

14. Ein Verfahren für einen Basisstations-Sendeempfänger (100) eines Mobilkommunikationssystems (600), das Verfahren umfassend:
Drahtloses Kommunizieren (22) mit einem oder mehreren mobilen Sendeempfängern (200);
Kommunizieren (24) mit einer Backhaul-Komponente (300) des Mobilkommunikationssystems (600);
Analysieren (26) von einem oder mehreren Datenpaketen, die zwischen dem einem oder den mehreren mobilen Sendeempfängern (200) und der Backhaul-Komponente (300) über den Basisstations-Sendeempfänger (100) kommuniziert werden;
Bestimmen (28) einer Datenpaketgröße, die an dem Basisstations-Sendeempfänger eine Fragmentierung von Paketen vermeiden würden, wenn die Pakete mit der Backhaul-Komponente (300) kommuniziert werden würden, basierend auf dem Analysieren von dem einem oder den mehreren Datenpaketen; und
Modifizieren (30) von zumindest einem weiteren Datenpaket, das zwischen dem einen oder den mehreren mobilen Sendeempfängern (200) und der Backhaul-Komponente (300) basierend auf dem bestimmten Datenpaket kommuniziert wird,
wobei der Inhalt des zumindest einen weiteren Pakets auf eine Art modifiziert wird, dass der eine oder die mehreren mobilen Sendeempfänger (200) oder die Backhaul-Komponente (300) veranlasst werden, Nachfolgepakete mit der bestimmten Datenpaketgröße zu senden,
wobei die Nachfolgedatenpakete zwischen dem einem oder den mehreren mobilen Sendeempfängern (200) und der Backhaul-Komponente (300) über den Basisstations-Sendeempfänger kommuniziert werden.

15. Ein Computerprogramm mit einem Programmcode zum Ausführen des Verfahrens gemäß Anspruch 14, wenn das Computerprogramm auf einem Computer, einem Prozessor oder einer programmierbaren Hardwarekomponente ausgeführt wird.

## Revendications

1. Appareil (10) pour un émetteur-récepteur de station de base (100) d'un système de communication mobile (600), l'appareil (10) comprenant
une première interface (12) configurée pour communiquer sans fil avec un ou plusieurs émetteurs-récepteurs mobiles (200) ;
une seconde interface (14) configurée pour communiquer avec un composant de liaison terrestre (300) du système de communication mobile (600) ;
et un module de commande (16) configuré pour :
contrôler les première et seconde interfaces (12 ; 14),
analyser un ou plusieurs paquets de données communiqués entre le ou les émetteurs-récepteurs mobiles (200) et le composant de liaison terrestre (300) via l'émetteur-récepteur de station de base (100),
déterminer une taille de paquet de données qui, à l'émetteur-récepteur de station de base, éviterait la fragmentation de paquets, si desdits paquets étaient communiqués en utilisant la seconde interface (14), en fonction d'une analyse de ledit ou desdits paquets de données, et
modifier au moins un autre paquet de données communiqué entre le ou les émetteurs-récepteurs mobiles (200) et le composant de liaison terrestre (300) en fonction de la taille de paquet de données déterminée,
dans lequel le contenu de ledit au moins un autre paquet est modifié d'une manière amenant le ou les émetteurs-récepteurs mobiles (200) ou le composant de liaison terrestre (300) à envoyer des paquets de suivi avec la taille de paquet de données déterminée,
dans lequel les paquets de données de suivi sont communiqués entre le ou les émetteurs-récepteurs mobiles (300) et le composant de liaison terrestre via le module de commande (16).

2. Appareil (10) selon la revendication 1, dans lequel le module de commande (16) est configuré pour déterminer une taille d'entête de protocole utilisée pour le paquet de données et pour baser la détermination de la taille de paquet de données sur la taille d'entête de protocole, et/ou dans lequel la fragmentation de paquets de données correspond à la fragmentation de paquets protocole Internet, IP.

3. Appareil (10) selon l'une des revendications 1 ou 2, dans lequel le module de commande (16) est configuré pour effectuer une inspection de paquet sur le ou les paquets de données, et/ou dans lequel le module de commande (16) est configuré pour effectuer éviter la fragmentation de paquets de données des paquets de données reçus du composant de liaison terrestre (300), et/ou dans lequel le module de commande (16) est configuré pour effectuer éviter la fragmentation de paquets de données des paquets de données transmis au composant de liaison terrestre (300).

4. Appareil (10) selon l'une des revendications 2 ou 3, dans lequel le module de commande (16) est configuré pour déterminer la taille d'entête de protocole en fonction d'un ou de plusieurs éléments du groupe de protocole de tunnelisation de service radio par paquet général, GPRS, GTP, protocole de datagramme utilisateur, UDP, IP, sécurité IP, IPsec et un protocole de la famille de protocoles de protocole de contrôle de transmission / protocole IP, TCP/IP.

5. Appareil (10) selon l'une des revendications 2 à 4, dans lequel le module de commande (16) est configuré pour déterminer si un indicateur est placé dans un paquet de données, l'indicateur indiquant que le paquet de données ne devrait pas être fragmenté, et dans lequel le module de commande (16) est configuré pour, dans le cas où le paquet de données dépasse la taille de paquet de données et que l'indicateur est placé, répondre à un expéditeur du paquet de données avec un message d'erreur.

6. Appareil (10) selon la revendication 5, dans lequel le message d'erreur est un message Internet Control Message Protocol, ICMP.

7. Appareil (10) selon l'une des revendications précédentes, dans lequel le module de commande (16) est configuré pour déterminer, dans le cadre de l'analyse et de la modification, si un paquet de données est un segment de synchronisation TCP, TCP SYN, et dans lequel le module de commande (16) est configuré pour, dans le cas où le paquet de données est un segment TCP SYN, remplacer la taille maximale de segment, MSS, dans le segment TCP SYN par la taille de paquet de données réduite d'une taille d'entête TCP / IP.

8. Appareil (10) selon l'une des revendications précédentes, dans lequel le module de commande (16) est configuré pour analyser, dans le cadre de l'analyse et de la modification, le ou les paquets de données entre un protocole de convergence de données par paquets, PDCP, et un plan utilisateur GTP, GTP-U.

9. Appareil (10) selon l'une des revendications précédentes, dans lequel le module de commande (16) est configuré pour déterminer la taille de paquet de données en tant qu'une taille d'une unité de transmission maximale, MTU, de bout en bout d'une interface réseau local, et/ou dans lequel le module de commande (16) est configuré pour déterminer la taille de paquet de données en fonction d'une configuration d'un lien de liaison terrestre de l'émetteur-récepteur de station de base (100).

10. Appareil (10) selon l'une des revendications précédentes, dans lequel le module de commande (16) est configuré pour déterminer la taille de paquet de données en fonction d'une découverte de MTU de chemin, PMTUD, sur un lien vers le composant de liaison terrestre (300) et/ou dans lequel le module de commande (16) est configuré pour déterminer la taille de paquet de données en fonction d'une taille de MTU signalée par une entité externe.

11. Appareil (10) selon l'une des revendications précédentes, dans lequel le module de commande (16) est configuré pour déterminer la taille de paquet de données en fonction d'une signalisation de strate de non accès, NAS.

12. Appareil (10) selon l'une des revendications précédentes, dans lequel le module de commande (16) est configuré pour déterminer la taille de paquet de données en fonction d'une taille de MTU de liaison terrestre et d'une taille de surdébit de protocole local.

13. Appareil (10) selon la revendication 12, dans lequel le surdébit de protocole comprend des tailles d'entête GTP/UDP/IP et des tailles d'entête IPsec/IP optionnelles.

14. Procédé pour un émetteur-récepteur de station de base (100) d'un système de communication mobile (600), le procédé comprenant
communiquer sans fil (22) avec un ou plusieurs émetteurs-récepteurs mobiles (200) ;
communiquer (24) avec un composant de liaison terrestre (300) du système de communication mobile (600) ;
analyser (26) un ou plusieurs paquets de données communiqués entre le ou les émetteurs-récepteurs mobiles (200) et le composant de liaison terrestre (300) via l'émetteur-récepteur de station de base (100) ;
déterminer (28) une taille de paquet de données qui, à l'émetteur-récepteur de station de base, éviterait la fragmentation de paquets, si desdits paquets étaient communiqués en utilisant le composant de liaison terrestre (300), en fonction d'une analyse de ledit ou desdits paquets de données ; et
modifier (30) au moins un autre paquet de données communiqué entre le ou les émetteurs-récepteurs mobiles (200) et le composant de liaison terrestre (300) en fonction du paquet de données déterminée,
dans lequel le contenu de ledit au moins un autre paquet est modifié d'une manière amenant le ou les émetteurs-récepteurs mobiles (200) ou le composant de liaison terrestre (300) à envoyer des paquets de suivi avec la taille de paquet de données déterminée,
dans lequel les paquets de données de suivi sont communiqués entre le ou les émetteurs-récepteurs mobiles (200) et le composant de liaison terrestre (300) via l'émetteur-récepteur de station de base.

15. Programme informatique ayant un code de programme pour exécuter le procédé de la revendication 14, lorsque le programme informatique est exécuté sur un ordinateur, un processeur ou un composant matériel programmable.
